# EUROPÄISCHE PATENTSCHRIFT

(11) **EP 3 394 687 B1**
(45) Veröffentlichungstag und Bekanntmachung des Hinweises auf die Patenterteilung: **12.02.2020**
(21) Anmeldenummer: 16818989.2
(22) Anmeldetag: 06.12.2016
(51) Int. Cl.: G05B 19/042

(54) **KONFIGURIERBARE DIAGNOSEEINHEIT**
CONFIGURABLE DIAGNOSIS UNIT
UNITÉ DE DIAGNOSTIC CONFIGURABLE

(30) Priorität: 22.12.2015 DE 102015016996; 10.03.2016 DE 102016002840
(43) Veröffentlichungstag der Anmeldung: 31.10.2018
(73) Patentinhaber: SEW-EURODRIVE GmbH & Co. KG, 76646 Bruchsal (DE)
(72) Erfinder: RITSCHEL, Andreas, 76706 Dettenheim (DE); NORENBURG, Benjamin, 76689 Karlsdorf-Neuthard (DE); SENFT, Christian, 76228 Karlsruhe-Grünwettersbach (DE); KOLLAR, Hans Jürgen, 76646 Bruchsal (DE); RICHTER, Sebastian, 69120 Heidelberg (DE); HORTENBACH, Martin, 76351 Linkenheim (DE)
(86) Internationale Anmeldenummer: PCT/EP2016/025168
(87) Internationale Veröffentlichungsnummer: WO 2017/108200

(56) Entgegenhaltungen:
- DE-A1- 19 744 230
- DE-A1-102007 019 050
- DE-A1-102009 011 157

## Beschreibung

Die Erfindung betrifft eine konfigurierbare Diagnoseeinheit und ein System mit Wechselrichter und konfigurierbarer Diagnoseeinheit.

Aus der DE 10 2013 218 679 A1ist eine Antriebssteuerung als nächstliegender Stand der Technik bekannt.

Aus der US 20140253008 A1 ist ein fehlersicherer Schaltkreis bekannt.

Aus der DE 10 2008 045 265 A1 ist ein Verfahren zur zweikanaligen Überwachung von sicherheitsrelevanten Sensorsignalen bekannt.

Aus der DE 10 2006 007 098 A1 ist ein Verfahren zur Funktionsprüfung einer Signalverarbeitungseinheit sowie eine geeignete Signalverarbeitungseinheit bekannt.

Aus der DE 10 2005 005 995 A1 ist ein Verfahren zum Überwachen von Signalverarbeitungseinheiten für Sensoren bekannt.

**Aus der** DE 10 2009 011 157 A1 **ist eine Vorrichtung zur Steuerung eines Antriebssystems bekannt.**

**Aus der** DE 197 44 230 A1 **sind Steuergeräte für ein System bekannt.**

**Aus der** DE 10 2007 019 050 A1 **ist ein Verfahren zum Betrieb einer funktionsmodularen automatisierungstechnischen Einrichtung mit einem Regelkreis bekannt.**

Der Erfindung liegt daher die Aufgabe zugrunde, Energie einzusparen.

Die Aufgabe wird erfindungsgemäß mit einer Diagnoseeinheit nach Anspruch 1 und einem System nach Anspruch 5 gelöst.

Von Vorteil ist dabei, dass Energie durch das Abschalten von Funktionsblöcken einsparbar ist. Außerdem ist die Überwachung abhängig vom Betriebsmodus ausführbar.

Bei einer vorteilhaften Ausgestaltung enthält das Diagnosemodul Funktionsblöcke, aufweisend
- einen Spannungsüberwachungsblock,
- einen Timeout-Block,
- einen Freigabe- und Verriegelungsblock,
- einen Vergleicher-Block,
- einen Meldeblock,
- einen Überstromüberwachungsblock,
- einen Frequenzüberwachungsblock,
- und/oder einen Temperaturüberwachungsblock.
Von Vorteil ist dabei, dass die entsprechenden Werte physikalischer Größen überwachbar sind, insbesondere Spannung, Antwortzeit, Strom, Temperatur, Information.

Erfindungsgemäß sind nicht benötigte Funktionsblöcke des Diagnosemoduls insbesondere zur Energieeinsparung abgeschaltet. Von Vorteil ist dabei, dass Energie einsparbar ist.

Bei einer vorteilhaften Ausgestaltung ist diese für SIL 3, PL e Anwendungen geeignet ausgeführt. Von Vorteil ist dabei, dass ein hoher Sicherheitslevel, wie beispielsweise **Sicherheits-Integritätslevel** (**SIL**) 3, erreichbar ist.

Bei einer vorteilhaften Ausgestaltung ist diese ausschließlich in nicht programmierbarer Logik ausgeführt, insbesondere so dass ein sicherheitsgerichteter Softwareentwicklungsprozess entfällt. Von Vorteil ist dabei, dass eine besonders einfache Ausführung ermöglicht ist.

Wichtige Merkmale bei dem System mit Wechselrichter und konfigurierbarer Diagnoseeinheit sind, dass die von einer Signalelektronik erzeugten pulsweitenmodulierten Ansteuersignale über Schaltblöcke einem Wechselrichter zuleitbar oder abschaltbar sind,
wobei die Schaltblöcke von Ausgangssignalen der konfigurierbaren Diagnoseeinheit steuerbar sind.

Von Vorteil ist dabei, dass Energie einsparbar ist durch Abschalten der deaktivierten Funktionsblöcke.

Bei einer vorteilhaften Ausgestaltung werden die Eingänge der konfigurierbaren Diagnoseeinheit aus Ausgängen einer Sicherheitssteuerung gespeist. Von Vorteil ist dabei, dass ein sicherheitsgerichtetes Abschalten ermöglicht ist.

Bei einer vorteilhaften Ausgestaltung überwacht die Sicherheitssteuerung die Signalelektronik. Von Vorteil ist dabei, dass die Sicherheit des Wechselrichterbetriebs erhöhbar ist.

Die Erfindung wird nun anhand von Abbildungen näher erläutert:

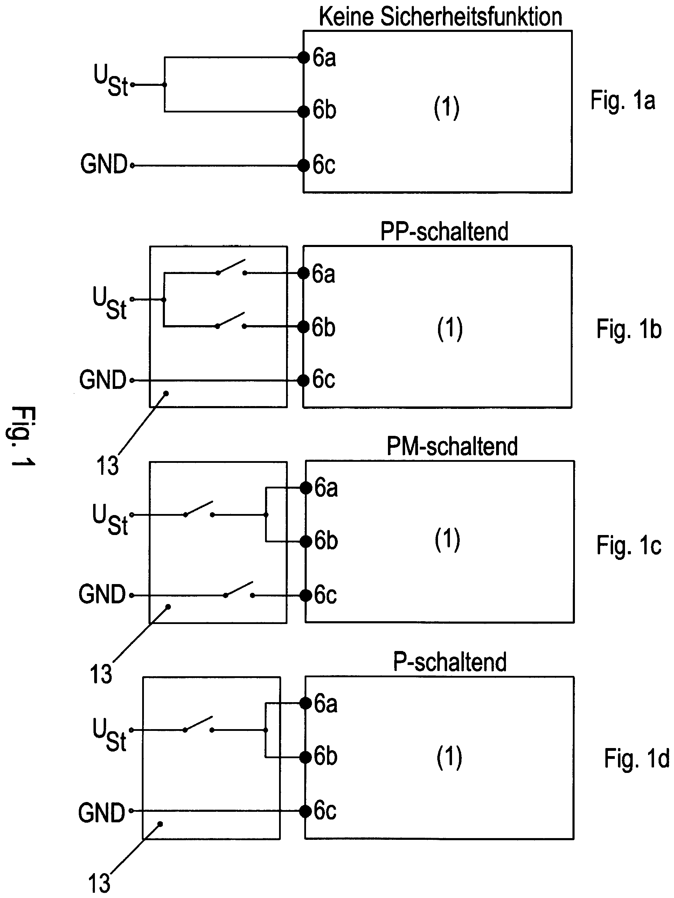

In der Figur 1, bestehend aus den Figurenteilen 1a, 1b, 1c und 1d, ist als Ausführungsbeispiel dargestellt, wie verschiedene Betriebsmodi der konfigurierbaren Diagnoseeinheit (1) zugeordnet sind.

Dabei ist bei Figur 1a keine vorgeschaltete Sicherheitssteuerung (13) vorhanden, sondern es werden die Versorgungsspannung Us und die Masse GND direkt an die für die Eingangssignale (6a, 6b, 6c) vorgesehenen Eingänge der konfigurierbaren Diagnoseeinheit (1) zugeführt.

Bei den Figuren 1b, 1c, 1d werden die Versorgungsspannung U_{S} und die Masse GND der Sicherheitssteuerung 13 zugeführt, welche jeweilige Anordnungen von Schaltern aufweist, die geschlossen sind, solange kein Sicherheitsfall vorliegt, wie beispielsweise Not-AUS.

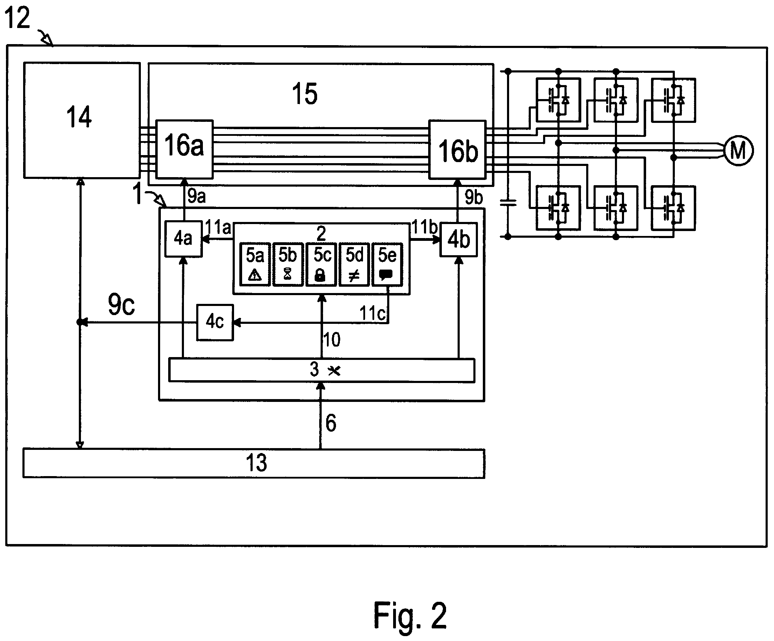

In der Figur 2 ist eine erfindungsgemäße Diagnoseeinheit (1) in einem sicherheitsgerichteten Leistungsantriebssystem (12) dargestellt.

Die Erfindung betrifft eine konfigurierbare Diagnoseeinheit (1) und ein Verfahren zum Betrieb einer konfigurierbaren Diagnoseeinheit (1), wobei ein Konfigurationsmodul (3) verschiedene Betriebsmodi, nämlich "keine Sicherheitsfunktion", "PP-schaltend", "PM-schaltend" oder "Pschaltend", erkennt und/oder auswertet und abhängig vom jeweils erkannten Betriebsmodus Funktionsblöcke (5) innerhalb eines Diagnosemoduls (2) der Diagnoseeinheit (1) aktiviert und/oder deaktiviert. Diese Betriebsmodi werden aus der äußeren Beschaltung der Eingangssignale (6) erkannt und/oder bestimmt und dienen dazu, unterschiedliche sowohl logische als auch zeitliche Verhaltensweisen an den Ausgangssignalen (9) des Ausgangsmoduls (4) der Diagnoseeinheit (1) zu bewirken. Das gezielte Abschalten nicht benötigter Funktionsblöcke (5) ermöglicht Energieeinsparung. Die Eingangssignale (6) umfassen die Eingangssignale (6a, 6b, 6c).

Um einen bestimmten Sicherheitslevel zu erreichen, werden die Signalzustände von Eingangssignalen diagnostiziert. Für den Anwender gibt es in der Praxis verschiedene Schaltungsvarianten, die Eingangssignale darzubieten. Jede dieser Möglichkeiten hat ihre Vor- und Nachteile und bedarf unterschiedlicher Diagnosemaßnahmen. Die Unterscheidungsmerkmale dieser Varianten werden erfindungsgemäß dazu verwendet, in der Diagnoseeinheit (1) unterschiedliche Funktionsblöcke (5) zu aktivieren und damit die Diagnosemaßnahmen anzupassen. Auf diese Weise ist es möglich, mit nur einer Schaltung, beispielsweise mit einem einzigen zertifizierten Schaltungsteil, insbesondere mit der konfigurierbaren Diagnoseeinheit (1), verschiedene Anwendungsfälle abzudecken.

Dabei werden die Eingangssignale (6a, 6b, 6c,) differentiell zueinander ausgewertet. Im Sicherheitsfall, wie beispielsweise Not-AUS, werden diese Differenzspannungen zu Null.

Liegt kein Sicherheitsfall vor, ist mindestens eine Differenzspannung an den Eingangssignalen (6a, 6b, 6c) vorhanden. Somit ist anhand dieser binären Konfiguration der Eingangssignale (6a, 6b, 6c) der Betriebsmodus erkennbar.

Solange kein Sicherheitsfall auftritt, werden die Eingangssignal (6a, 6b, 6c) außerdem überwacht, wobei eine erste Überwachungsfunktion (5) vom Betriebsmodus abhängig aktiviert ist oder nicht. Dies gilt auch für weitere Überwachungsfunktionen (5).

Die konfigurierbare Diagnoseeinheit (1) setzt sich als Ausführungsbeispiel zusammen aus den logischen Untereinheiten Konfigurationsmodul (3), Diagnosemodul (2) und Ausgangsmodul (4), das im Ausführungsbeispiel drei Blöcke (4a, 4b, 4c) umfasst.

Das Konfigurationsmodul (3) leitet die Versorgungsspannung der Schaltung an das Diagnosemodul (2) weiter und führt eine Konditionierung der Eingangssignale (6a, 6b und 6c) durch. Über einen Steckverbinder werden die Betriebsarten "keine Sicherheitsfunktion", "PP-schaltend", "PM-schaltend" und "P-schaltend" vorgegeben.

Abhängig von der jeweils gegebenen Betriebsart werden unterschiedliche Überwachungsfunktionen (5) ausgeführt, so dass abhängig von den Eingangssignalen (6) entsprechend unterschiedliche Ausgangssignale (9) von der Diagnoseeinheit (1) erzeugt werden.

Das Diagnosemodul (2) weist logische Untereinheiten auf, nämlich die Funktionsblöcke Spannungsüberwachungsblock (5a), Timeout-Block (5b), Verriegelungsblock (5c), Vergleicherblock (5d) und Freigabe- und Meldeblock (5e).

Der Spannungsüberwachungsblock (5a) setzt den Ausgang des Diagnosemoduls auf logisch "0", insbesondere deaktiviert er also den Ausgang, wenn die Versorgungsspannung einen vorgegebenen Bereich verlässt, wobei eine Hysterese sowohl bei Überschreitung als auch bei Unterschreitung des erlaubten Spannungsbereichs wirksam ist. Befindet sich die Versorgungsspannung innerhalb des vorgegebenen Bereichs ist der Ausgang des Diagnosemoduls auf logisch "1" gesetzt, insbesondere also der Ausgang aktiviert.

Der Timeout-Block (5b) überwacht die Eingangssignale an (6a) und (6b). Dabei vergleicht der Block die beiden Eingangssignale (6a) und (6b), wobei er den Ausgang des Diagnosemoduls auf logisch "0" setzt, wenn die Eingangssignale für mehr als eine Mindestzeitspanne antivalent sind, insbesondere also einen unterschiedlichen Logikpegel aufweisen. Die Mindestzeitspanne weist einen Wert zwischen 100ms und 1s auf, beispielweise beträgt sie 300 ms.

Wenn der Timeout-Block (5b) durch eine logische "0" die Erkennung eines Fehlers signalisiert, verriegelt der Freigabe- und Verriegelungsblock (5c) den Ausgang des Diagnosemoduls und setzt diesen dauerhaft in den Zustand logisch "0". Dieser Verriegelungszustand kann nur durch einen Reset entriegelt werden. Für diesen Reset gibt es die folgenden Möglichkeiten:
- 6a = 6b = logisch "0"
- 6c = logisch "1"
- 6d = logisch "0" oder 6e = logisch "1" (Versorgungsspannungsreset)

Der Vergleicherblock (5d) setzt den Ausgang des Diagnosemoduls auf logisch "0", wenn die Eingänge (6a) und (6b) unterschiedliche Logikpegel aufweisen.

Die Ausgangssignale der Funktionsblöcke (5a, 5b, 5c und 5d) des Diagnosemoduls (2) werden UND-verknüpft (11) den Ausgangsmodulen (4a) und (4b) zur Verfügung gestellt.

Der Meldeblock (5e) sammelt Zustandsinformationen der anderen Funktionsblöcke (5a, 5b, 5c und 5d) und stellt diese über das Ausgangsmodul (4c) dem Sicherheitsschaltgerät (13) sowie der Signalelektronik (14) zur Verfügung, insbesondere über ein Ausgangssignal (9c) zur Statusrückmeldung der Diagnoseeinheit (1).

Das Ausgangsmodul (4) führt einerseits mit den Ausgangssignalen (11) des Diagnosemoduls (2), den konditionierten Eingangssignalen (10) eine UND-Verknüpfung durch und stellt das Verknüpfungsergebnis am Ausgangsblock (4a) beziehungsweise (4b) des Ausgangsmoduls (4) als Ausgangssignal (9a) beziehungsweise (9b) den Schaltblöcken (16a) und (16b) des Schaltmoduls (15) zur Verfügung. Außerdem werden die Ausgangssignale (11c) des Meldeblocks (5e) im Ausgangsblock (4c) aufbereitet/konditioniert und diese Informationen dem Sicherheitsschaltgerät (13) sowie der Signalelektronik (14) über das Ausgangssignal (9c) zur Statusrückmeldung des Diagnosemoduls (2) zur Verfügung gestellt.

Die Diagnoseeinheit (1) zeigt folgendes Verhalten in Abhängigkeit der Betriebsarten "keine Sicherheitsfunktion", "PP-schaltend", "PM-schaltend" und "P-schaltend":
- Der Spannungsüberwachungsblock (5a) ist in jeder Betriebsart aktiv.
- Die Funktionsblöcke Timeout-Block (5b), Freigabe- und Verriegelungsblock (5c) und Vergleicherblock (5d) sind nur bei "PP-schaltender" Betriebsart aktiv.
- Die Zustandsinformation des Meldeblocks (5e) ist in der Betriebsart "keine Sicherheitsfunktion" deaktiviert. In den Betriebsarten "PM-schaltend" und "P-schaltend" sind diese Informationen eingeschränkt. Nur in der Betriebsart "PP-schaltend" steht die Meldefunktion im vollen Umfang zur Verfügung.

Falls keine Sicherheitsfunktion ausgeführt werden soll, entfällt die Sicherheitssteuerung (13) und die Versorgungsspannung Us sowie das Massepotential GND werden direkt weitergeleitet an die konfigurierbare Diagnoseeinheit (1).

Wie in Figur 2 dargestellt, ist das Leistungsantriebssystem (12) vorzugsweise als Wechselrichter ausgeführt, dessen pulsweitenmodulierte Ansteuersignale für die in Halbbrücken angeordneten Leistungshalbleiterschalter des Wechselrichters über ein Schaltmodul (15) von einer als Antriebssteuerung wirksamen Signalelektronik (14) übertragen werden.

Dabei weist das Schaltmodul (15) zwei Schaltblöcke (16a, 16b) auf, wobei jeder dieser Schaltblöcke (16a, 16b) die Ansteuersignale zu unterbrechen vermag. Hierzu werden die Schaltblöcke (16a, 16b) über die Ausgangssignale (9) entsprechend angesteuert. Im Sicherheitsfall bewirkt das Ausgangssignal (9a), dass der Schaltblock (16a) die Ansteuersignale unterbricht. Ebenso bewirkt das Ausgangssignal (9b), dass der Schaltblock (16b) die Ansteuersignale im Sicherheitsfall unterbricht.

Somit ist der Wechselrichter im Sicherheitsfall sicherheitsgerichtet abschaltbar und der vom Wechselrichter gespeiste Motor (M) wird nicht weiter gespeist.

Die folgende Bezugszeichenliste wird in die Beschreibung einbezogen und erläutert weitere Merkmale der Erfindung.

### Bezugszeichenliste

- (1): Konfigurierbare Diagnoseeinheit
- (2): Diagnosemodul
- (3): Konfigurationsmodul
- (4): Ausgangsmodul
- (4a): Ausgangsblock a
- (4b): Ausgangsblock b
- (4c): Ausgangsblock zur Statusrückmeldung
- (5): Funktionsblöcke des Diagnosemoduls (2)
- (5a): Spannungsüberwachungsblock des Diagnosemoduls (2)
- (5b): Timeout-Block des Diagnosemoduls (2)
- (5c): Freigabe- und Verriegelungsblock des Diagnosemoduls (2)
- (5d): Vergleicherblock des Diagnosemoduls (2)
- (5e): Meldeblock zur Statusrückmeldung des Diagnosemoduls (2)
- (6a): Signaleingang der Diagnoseeinheit (1)
- (6b): Signaleingang der Diagnoseeinheit (1)
- (6c): Signaleingang der Diagnoseeinheit (1)
- (9): Ausgangsignale der Diagnoseeinheit (1)
- (9a): Ausgangssignal Kanal A der Diagnoseeinheit (1)
- (9b): Ausgangssignal Kanal B der Diagnoseeinheit (1)
- (9c): Ausgangssignal zur Statusrückmeldung der Diagnoseeinheit (1)
- (10): Ausgangssignale des Konfigurationsmoduls (3)
- (11): Ausgangssignale des Diagnosemoduls (2)
- (11a): Ausgangssignale Kanal A des Diagnosemoduls (2)
- (11b): Ausgangssignale Kanal B des Diagnosemoduls (2)
- (11c): Ausgangssignal des Meldeblocks zur Statusrückmeldung des Diagnosemoduls (2)
- (12): Elektronisches Leistungsantriebssystem
- (13): Sicherheitssteuerung
- (14): Signalelektronik
- (15): Schaltmodul
- (16a): Schaltblock A
- (16b): Schaltblock B
- (M): Motor

## Patentansprüche

1. Konfigurierbare Diagnoseeinheit (1) für ein elektrisches Leistungsantriebssystem (12) mit einstellbarer Drehzahl, das für den Einsatz in sicherheitsbezogenen Anwendungen geeignet ausgeführt ist,
- **wobei die Diagnoseeinheit** mindestens zwei Signaleingänge **aufweist,** wobei **das jeweilige Eingangssignal des jeweiligen Signaleingangs sowohl** mindestens eine Zustandsinformation als auch mindestens eine Konfigurationsinformation enthält,
- **wobei die Diagnoseeinheit** ein Diagnosemodul (2) **aufweist,** welches **derart geeignet ausgeführt ist, dass es** die Zustandsinformationen **der Eingangssignale der Signaleingänge logisch prüft und deren zeitliches Verhalten überwacht** und zwei oder mehr voneinander unabhängige, **derart aktive** Funktionsblöcke (5) aufweist, **dass diese Funktionsblöcke (5) vom Diagnosemodul (2) überwachten Parameter bestimmen,**
- **wobei die Diagnoseeinheit** ein Konfigurationsmodul (3) **aufweist,** welches **derart geeignet ausgeführt ist, dass es** die Konfigurationsinformationen **der Eingangssignale der** Signaleingänge auswertet und abhängig vom zugehörigen Auswertungsergebnis (10) die **aktiven** Funktionsblöcke (5) **des Diagnosemoduls** (2) auswählt,
- **wobei die Diagnoseeinheit mehrere** Ausgangsmodule (4) **aufweist,** wobei **das jeweilige Ausgangsmodul einen** logischen Ausgangszustand (11) des Diagnosemoduls (2) mit **den Eingangssignalen der** Signaleingängen logisch verknüpft und daraus mindestens ein Ausgangssignal (9) erzeugt,
**wobei das jeweilige Ausgangsmodul (4) derart geeignet ausgeführt ist, dass** eine Änderung der Zustandsinformation **in einem jeweiligen** Eingangssignal **eines jeweiligen Signaleingangs** zu einer Änderung des logischen Ausgangszustands (9) des **jeweiligen** Ausgangsmoduls (4) führt,
**wobei das Konfigurationsmodul (3) derart geeignet ausgeführt ist, dass** eine Änderung der Konfigurationsinformation im **jeweiligen** Eingangssignal **eines jeweiligen Signaleingangs** zu einer daran angepassten Änderung der **jeweiligen** Auswahl der aktiven Funktionsblöcke (5) führt,
**wobei nicht ausgewählte Funktionsblöcke (5) des Diagnosemoduls (2) insbesondere zur Energieeinsparung abgeschaltet sind,**
**wobei** eine Änderung der Konfigurationsinformation im Eingangssignal **des jeweiligen Signaleingangs** zu einer daran angepassten Änderung der überwachten Parameter durch Auswahl der aktiven Funktionsblöcke (5) durch das Diagnosemodul (2) führt,
**wobei ein als Meldeblock (5e) ausgeführter Funktionsblock Zustandsinformationen der anderen Funktionsblöcke (5a, 5b, 5c und 5d) sammelt und diese über eines der Ausgangsmodule (4c) einem Sicherheitsschaltgerät (13) sowie einer Signalelektronik (14) zur Verfügung stellt, insbesondere über ein Ausgangssignal (9c) zur Statusrückmeldung der Diagnoseeinheit (1).**

2. Konfigurierbare Diagnoseeinheit (1) nach Anspruch 1,
**dadurch gekennzeichnet, dass**
das Diagnosemodul (2) **als** Funktionsblöcke (5) enthält
- einen Spannungsüberwachungsblock (5a),
- einen Timeout-Block (5b),
- einen Freigabe- und Verriegelungsblock (5c),
- einen Vergleicher-Block (5d),
- einen Meldeblock (5e),
- einen Überstromüberwachungsblock (5f)
- einen Frequenzüberwachungsblock (5g)
- und/oder einen Temperaturüberwachungsblock (5h).

3. Konfigurierbare Diagnoseeinheit (1) nach Anspruch 1 oder 2,
**dadurch gekennzeichnet, dass**
**die Diagnoseeinheit (1)** für SIL 3, PL e Anwendungen geeignet ausgeführt ist.

4. Konfigurierbare Diagnoseeinheit (1) nach Anspruch 1 oder 2,
**dadurch gekennzeichnet, dass**
**die Diagnoseeinheit (1)** ausschließlich in nicht programmierbarer Logik ausgeführt ist, insbesondere so dass ein sicherheitsgerichteter Softwareentwicklungsprozess entfällt.

5. System, **bestehend aus einem Wechselrichter und einer konfigurierbaren Diagnoseeinheit** (1) **nach einem der vorangegangenen Ansprüche,**
**dadurch gekennzeichnet, dass**
die von einer Signalelektronik (14) erzeugten pulsweitenmodulierten Ansteuersignale über Schaltblöcke (16) dem Wechselrichter zuleitbar oder abschaltbar sind,
wobei die Schaltblöcke (16) von Ausgangssignalen (9) der konfigurierbaren Diagnoseeinheit (1) steuerbar sind.

6. **System nach Anspruch 5,**
**dadurch gekennzeichnet, dass**
die **Signale**ingänge der konfigurierbaren Diagnoseeinheit (1) aus Ausgängen einer Sicherheitssteuerung (13) gespeist werden.

7. **System nach Anspruch 5 oder 6,**
**dadurch gekennzeichnet, dass**
die Sicherheitssteuerung (13) **derart eingerichtet ist, dass sie** die Signalelektronik (14) überwacht.

## Claims

1. Configurable diagnosis unit (1) for a variable-speed electrical power drive system (12) configured to be suitable for use in safety-related applications,
- wherein the diagnosis unit has at least two signal inputs, wherein the respective input signals of each signal input contain both at least one piece of status information and at least one piece of configuration information,
- wherein the diagnosis unit has a diagnosis module (2) configured to be suitable in such a way that it logically checks the status information of the input signals of the signal inputs and monitors the behaviour thereof over time and has two or more independent function blocks (5) that are active such that said function blocks (5) determine parameters monitored by the diagnosis module (2),
- wherein the diagnosis unit has a configuration module (3) which is configured to be suitable in such a way that it evaluates the configuration information of the input signals of the signal inputs and selects the active function blocks (5) of the diagnosis module (2) depending on the associated evaluation result (10),
- wherein the diagnosis unit has a plurality of output modules (4), wherein each output module links a logical output status (11) of the diagnosis module (2) to the input signals of the signal inputs and generates at least one output signal (9) therefrom,
wherein each output module (4) is configured to be suitable in such a way that a change in the status information in a particular input signal of a particular signal input leads to a change in the logical output status (9) of the particular output module (4),
wherein the configuration module (3) is configured to be suitable in such a way that a change in the configuration information in the particular input signal of a particular signal input leads to a change, adapted to said change, in the relevant selection of the active function blocks (5),
wherein unselected function blocks (5) of the diagnosis module (2) are switched off in particular to save energy,
wherein a change in the configuration information in the input signal of the particular signal input leads to a change, adapted to said change, in the monitored parameters through the selection of the active function blocks (5) by the diagnosis module (2),
wherein a function block configured as a reporting block (5e) collects status information on the other function blocks (5a, 5b, 5c and 5d) and provides said information to a safety shutdown device (13) and to a signal electronics (14) by means of one of the output modules (4c), in particular by means of an output signal (9c) regarding the status feedback of the diagnosis unit (1).

2. Configurable diagnosis unit (1) according to claim 1,
**characterised in that**
the diagnosis module (2) contains the following as function blocks (5)
- a voltage monitoring block (5a),
- a time-out block (5b),
- a release and locking block (5c),
- a comparator block (5d),
- a reporting block (5e),
- an overcurrent monitoring block (5f),
- a frequency monitoring block (5g)
- and/or a temperature monitoring block (5h).

3. Configurable diagnosis unit (1) according to either claim 1 or claim 2,
**characterised in that**
the diagnosis unit (1) is configured to be suitable for SIL 3, PLe applications.

4. Configurable diagnosis unit (1) according to either claim 1 or claim 2,
**characterised in that**
the diagnosis unit (1) is configured solely in non-programmable logic, in particular such that no safety-related software development process is required.

5. System consisting of an inverter and a configurable diagnosis unit (1) according to any of the preceding claims,
**characterised in that**
the pulse-width-modulated actuation signals generated by a signal electronics (14) can be fed to the inverter by means of switching blocks (16) or can be switched off,
the switching blocks (16) being controllable by output signals (9) of the configurable diagnosis unit (1).

6. System according to claim 5,
**characterised in that**
the signal inputs of the configurable diagnosis unit (1) are fed from outputs of a safety control (13).

7. System according to either claim 5 or claim 6,
**characterised in that**
the safety control (13) is set up such as to monitor the signal electronics (14).

## Revendications

1. Unité de diagnostic configurable (1) pour un entraînement électrique de puissance (12) à vitesse de rotation paramétrable, laquelle est réalisée pour être adaptée aux applications de sécurité,
- dans laquelle l'unité de diagnostic comporte au moins deux entrées de signal, dans laquelle le signal d'entrée respectif de l'entrée de signal respective contient également au moins une information d'état et au moins une information de configuration,
- dans laquelle l'unité de diagnostic comporte un module de diagnostic (2), lequel est réalisé pour être adapté de sorte qu'il vérifie logiquement les informations d'état des signaux d'entrée des entrées de signal et contrôle leur comportement temporel et comporte deux ou plus blocs fonctionnels (5) indépendants l'un de l'autre et actifs de telle sorte que ces blocs fonctionnels (5) déterminent les paramètres contrôlés par le module de diagnostic (2),
- dans laquelle l'unité de diagnostic comporte un module de configuration (3), lequel est réalisé pour être adapté de sorte qu'il analyse les informations de configuration des signaux d'entrée des entrées de signal et sélectionne les blocs fonctionnels (5) actifs du module de diagnostic (2) en fonction du résultat d'analyse associé (10),
- dans laquelle l'unité de diagnostic comporte plusieurs modules de sortie (4), dans laquelle le module de sortie respectif combine logiquement un état logique de sortie (11) du module de diagnostic (2) avec les signaux d'entrée des entrées de signal et produit ainsi au moins un signal de sortie (9),
- dans laquelle le module de sortie respectif (4) lequel est réalisé pour être adapté de sorte qu'une variation de l'information d'état dans un signal d'entrée respectif d'une entrée de signal respective mène à une variation de l'état logique de sortie (9) du module de sortie respectif (4),
- dans laquelle le module de configuration (3), lequel est réalisé pour être adapté de sorte qu'une variation de l'information de configuration dans un signal d'entrée respectif d'une entrée de signal respective mène à une variation correspondante de la sélection respective des blocs fonctionnels actifs (5),
- dans laquelle les blocs fonctionnels non sélectionnés (5) du module de diagnostic (2) sont désactivés, en particulier mis en mode économie d'énergie,
- dans laquelle une variation de l'information de configuration dans un signal d'entrée respectif d'une entrée de signal respective mène à une variation correspondante du paramètre contrôlé par sélection des blocs fonctionnels actif (5) par le module de diagnostic (2),
- dans laquelle un bloc fonctionnel réalisé comme bloc de notification (5e) collecte les informations d'état des autres blocs fonctionnels (5a, 5b, 5c et 5d) et fournit celles-ci à un relais de sécurité (13) ainsi qu'à une électronique de signal (14) par le biais d'un des modules de sortie (4c), en particulier par le biais d'un signal de sortie (9c) pour un accusé de réception de statut de l'unité de diagnostic (1).

2. Unité de diagnostic configurable (1) selon la revendication 1, **caractérisée en ce que** le module de diagnostic (2) contient comme blocs fonctionnels (5)
- un bloc de contrôle de tension (5a),
- un bloc de temporisation (5b),
- un bloc de verrouillage et déverrouillage (5c),
- un bloc comparateur (5d),
- un bloc de notification (5e),
- un bloc de contrôle de surintensité (5f),
- un bloc de contrôle de fréquence (5g),
- et/ou un bloc de contrôle de température (5h).

3. Unité de diagnostic configurable (1) selon la revendication 1 ou 2, **caractérisée en ce que** l'unité de diagnostic (1) est réalisée pour être adaptée aux applications SIL 3, PL e.

4. Unité de diagnostic configurable (1) selon la revendication 1 ou 2, **caractérisée en ce que** l'unité de diagnostic (1) est réalisée exclusivement en logique non-programmable, en particulier de sorte qu'un processus de développement logiciel axé sur la sécurité n'est plus nécessaire.

5. Système, constitué d'un onduleur et d'une unité de diagnostic configurable (1) selon l'une des revendications précédentes, **caractérisé en ce que**
les signaux de commande modulés en largeur d'impulsion produits par une électronique de signal (14) peuvent, par le biais de blocs de commutation (16), être envoyés à l'onduleur ou désactivés,
dans lequel les blocs de commutation (16) peuvent être commandés par les signaux de sortie (9) de l'unité de diagnostic configurable (1).

6. Système selon la revendication 5, **caractérisé en ce que** les entrées de signal de l'unité de diagnostic configurable (1) sont alimentées par les sorties d'une commande de sécurité (13).

7. Système selon la revendication 5 ou 6, **caractérisé en ce que** la commande de sécurité (13) est disposée de façon à contrôler l'électronique de signal (14).
